(19) Europäisches Patentamt

European Patent Office

Office européen des brevets

(11) **EP 3 097 407 B1**

(12) **FASCICULE DE BREVET EUROPEEN**

(45) Date de publication et mention de la délivrance du brevet:
**06.03.2019 Bulletin 2019/10**

(21) Numéro de dépôt: **15705649.0**

(22) Date de dépôt: **21.01.2015**

(51) Int Cl.:
***G01N 21/90*** *(2006.01)*

(86) Numéro de dépôt international:
**PCT/FR2015/050144**

(87) Numéro de publication internationale:
**WO 2015/110755 (30.07.2015 Gazette 2015/30)**

(54) **PROCÉDÉ ET DISPOSITIF POUR LA DÉTECTION NOTAMMENT DE DÉFAUTS REFRACTANTS**

VERFAHREN UND VORRICHTUNG ZUR ERKENNUNG INSBESONDERE VON LICHTBRECHENDEN DEFEKTEN

METHOD AND DEVICE FOR THE DETECTION IN PARTICULAR OF REFRACTING DEFECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2014 FR 1450514**

(43) Date de publication de la demande:
**30.11.2016 Bulletin 2016/48**

(73) Titulaire: **Tiama**
**69390 Vourles (FR)**

(72) Inventeurs:
• **OLLIVIER, Michel**
  **F-35690 Acigne (FR)**
• **COLLE, Olivier**
  **F-69600 Oullins (FR)**
• **LECONTE, Marc**
  **F-69700 Loire sur Rhone (FR)**
• **DROUET, Florence**
  **F-91440 Bures sur Ivette (FR)**

(74) Mandataire: **Thibault, Jean-Marc**
**Cabinet Beau de Loménie**
**51, Avenue Jean Jaurès**
**B.P. 7073**
**69301 Lyon Cedex 07 (FR)**

(56) Documents cités:
**FR-A1- 2 794 241     FR-A1- 2 907 553
FR-A1- 2 958 040     FR-A1- 2 958 751
FR-A1- 2 993 662**

**Description**

La présente invention concerne le domaine technique de l'inspection en ligne de récipients transparents ou translucides tels que par exemple, des bouteilles ou des flacons, pour déterminer des caractéristiques présentées par de tels récipients en vue de leur contrôle qualité.

La présente invention vise en particulier à inspecter des récipients en vue de détecter d'éventuels défauts des récipients, présentant la caractéristique de réfracter ou dévier la lumière, tels que par exemple, les défauts de type pli, peau d'orange, frottoir, frisé ... Dans la suite de la description, de tels défauts seront appelés défauts réfractants ou défauts de réfraction.

Dans la fabrication industrielle de récipients en verre creux par les procédés connus tels que le pressé-soufflé et le soufflé-soufflé, il est fréquent de constater que l'épaisseur de verre varie localement dans la paroi du récipient, même pour des articles de géométrie simple comme des bouteilles cylindriques. La surface extérieure, en contact avec le moule durant le formage, prend généralement la forme voulue. De ce fait, les variations de distribution du verre et donc d'épaisseur de la paroi se manifestent par des déformations de la surface intérieure. Lorsque ces variations sont faibles, elles n'ont pas d'inconvénients ni sur la solidité ni sur l'esthétique des récipients. En revanche, une mauvaise répartition du matériau conduit à des aspects esthétiques parfois gênants, et au-delà, à des défauts par manque de verre en certains endroits. Il est considéré qu'une bonne répartition du verre est une répartition homogène de l'épaisseur, donc des surfaces interne et externe quasiment parallèles partout. Dans les méthodes classiques, une mauvaise répartition de verre est caractérisée et détectée par des mesures d'épaisseur de verre, qui sont généralement ponctuelles ou localisées.

Dans l'état de la technique, diverses solutions ont été proposées pour détecter des défauts de réfraction de la lumière. Par exemple, le brevet FR 2 794 241 a proposé une machine adaptée pour détecter des défauts de réfraction sans faire tourner le récipient.

Cette machine comporte un convoyeur conçu pour amener jusqu'à un poste d'inspection les récipients à inspecter. Le poste d'inspection comporte une caméra située sur un côté du convoyeur et adaptée pour prendre une image du récipient. Le poste d'inspection comporte également, une source lumineuse située sur l'autre côté du convoyeur et associée à des moyens pour définir une intensité lumineuse à variation continue cyclique dans l'espace entre les extrêmes du sombre et du clair de la source lumineuse, avec un taux de modification qui est inférieur à celui qui est nécessaire pour une détection de défauts. Des défauts de réfraction du récipient, grâce à l'effet de lentille, présentent à la caméra des parties de la source lumineuse sous forme de compression. Cette image en compression de la source lumineuse avec un taux de variation d'intensité fortement accru améliore la détection d'un défaut réfractant en augmentant son contraste.

En pratique, cette technique ne permet pas de déceler des défauts réfractant la lumière présentant un faible pouvoir réfractant.

Une autre technique connue et par exemple décrite par le brevet US 5 004 909 propose un dispositif d'inspection des parois d'un récipient comportant une caméra permettant d'observer à travers un récipient entraîné en rotation, un motif lumineux composé de bandes alternées blanches et noires. L'image du récipient est analysée en prenant en compte, les déformations des bandes blanches et noires provoquées par la présence d'un défaut réfractant la lumière qu'on peut ainsi détecter.

En pratique, cette technique s'avère très sensible à la répartition du matériau constitutif des récipients. En effet, en cas de répartition de verre hétérogène mais acceptable, les réfractions provoquées par les pentes de la surface interne ont pour effet de fortement déformer les motifs, de sorte qu'il devient quasiment impossible de les reconnaitre, les mesurer et les analyser dans les images. En conséquence, pour de telles productions, il n'apparait pas possible de distinguer les défauts réfractants des récipients, des irrégularités de l'épaisseur de la paroi des récipients. Il n'apparait possible de détecter les défauts réfractant que sur des productions dans lesquelles des irrégularités de l'épaisseur de la paroi des récipients sont fréquentes et acceptables.

Il est également connu, par la demande de brevet FR 2 907 553 un procédé et un dispositif comportant une source lumineuse pilotée pour produire un premier type d'éclairage homogène et un deuxième type d'éclairage formé de zones sombres et de zones claires alternées avec une variation spatiale discontinue. Ce dispositif comporte également des moyens de prise d'images des objets éclairés par le premier et le deuxième type d'éclairage en vue de détecter respectivement des défauts à fort contraste et des défauts à faible contraste.

Si un tel dispositif permet de détecter deux types de défauts avec une seule source ce dispositif permet difficilement de détecter certains types de défauts réfractants en raison principalement de la prise d'une seule image avec le deuxième type d'éclairage. En effet, les défauts à fort contraste sont détectés avec la source de lumière uniforme. En complément, les défauts à faible contraste sont détectés avec l'unique image obtenue lorsque la source présente des bandes alternées noires et blanches avec des bords francs et donc une variation discontinue. Dans cette image sont analysées des déformations des bords francs du motif à bandes ainsi que des contrastes locaux produits par les défauts réfractants, comme cela est fait dans la demande de brevet US5004909. Lorsque le récipient possède des variations d'épaisseur et donc une mauvaise répartition de verre, les déformations du motif sont importantes et ne permettent plus de détecter efficacement les défauts à faible contraste.

La demande de brevet FR 2 958 040 décrit une méthode et une installation pour détecter la présence et l'altitude de défauts dans un composant optique consistant à produire un motif périodique lumineux qui est transmis à travers le composant optique immobilisé dans un poste de contrôle, à acquérir successivement en transmission à travers le composant, des images du motif périodique décalé en phase à chaque acquisition, à calculer des images de phase à partir de ces images successives et à analyser lesdites images de phase pour en déduire la présence de défauts.

En pratique, cette technique n'est pas adaptée à l'inspection en ligne de récipients transparents ou translucides défilant à haute cadence entre une source lumineuse et un système, car elle nécessite l'arrêt prolongé des objets inspectés pour permettre l'acquisition des plusieurs images.

La présente invention vise donc à remédier aux inconvénients de l'art antérieur en proposant une nouvelle technique d'inspection en ligne de récipients transparents ou translucides, adaptée pour détecter au moins des défauts réfractant la lumière, indépendamment de l'homogénéité de répartition du matériau.

Un autre objet de l'invention est de proposer un procédé permettant d'inspecter les récipients se déplaçant en ligne avec une vitesse élevée, en vue de détecter, avec une grande fiabilité, au moins des défauts réfractants la lumière mais également au moins de déterminer la qualité de répartition du matériau constitutif du récipient.

La présente invention vise à proposer un procédé optique d'inspection à haute cadence en ligne de récipients transparents ou translucides se déplaçant entre une caméra linéaire et une source lumineuse et présentant une variation continue d'intensité lumineuse selon un motif périodique de période spatiale selon au moins une direction de variation, la source lumineuse et la caméra linéaire étant reliées à une unité de commande et de traitement d'images.

Selon l'invention :

- pour chaque incrément de déplacement du récipient inspecté, on acquiert cycliquement, une séquence de N lignes d'images successives du récipient pour i variant de 1 à N, avec N au moins égal à 3, de sorte que pour chaque ligne d'image :

  • on illumine le récipient par la source lumineuse,
  • on acquiert la ligne d'image du récipient,
  • on décale le motif périodique pour la prochaine ligne selon la direction de variation d'une distance,

- on calcule pour chaque incrément du récipient, à partir des N de lignes d'images, au moins une ligne d'image de phase,
- on analyse les lignes d'image de phase, afin d'en déduire en tant que caractéristique du récipient, au moins la présence d'un défaut réfractant la lumière ou la qualité de répartition du matériau constitutif du récipient.

De plus, le procédé selon l'invention peut présenter en outre en combinaison au moins l'une et/ou l'autre des caractéristiques additionnelles suivantes ;

- l'analyse des lignes d'image de phase consiste à déterminer la vitesse et/ou l'amplitude de variation locale de la phase et à comparer lesdites vitesses et/ou amplitudes à des seuils afin de déterminer la présence d'un défaut réfractant la lumière ou la qualité de répartition du matériau constitutif du récipient,
- pour l'analyse des lignes d'image de phase, il comprend après l'opération visant à obtenir des lignes d'image de phase pour chaque récipient, une opération de dépliement de phase,
- on calcule pour chaque incrément de déplacement du récipient, à partir des N de lignes d'images, au moins une ligne d'image d'intensité de lumière,
- on juxtapose les lignes d'image d'intensité de lumière obtenues pour des incréments de déplacement successifs de manière à obtenir une image de transmission du récipient ou d'une partie de récipient,
- on analyse l'image de transmission contenant l'information de quantité de lumière transmise par le récipient, afin d'en déduire en tant que caractéristique du récipient, au moins la présence d'un défaut absorbant la lumière,
- la direction de variation du motif périodique est parallèle, perpendiculaire ou oblique par rapport au réseau capteur de la caméra linéaire,
- le procédé consiste pour l'analyse des lignes d'image de phase, à juxtaposer des lignes d'image ou des lignes d'image de phase ou des lignes d'image de phase dépliée obtenues pour des incréments de déplacement successifs de manière à obtenir une image de phase d'au moins une partie de récipient,
- l'analyse des lignes d'image de phase comprend une étape de correction géométrique afin de réduire les effets de vibration du récipient pendant le déplacement et/ou les effets de perspective dus à une observation non orthogonale à la direction de déplacement.

Un autre objet de l'invention est de proposer un dispositif optique d'inspection à haute cadence sur ligne de production, de récipients transparents ou translucides, se déplaçant entre une caméra linéaire et une source lumineuse présentant une variation continue d'intensité lumineuse selon un motif périodique de période spatiale selon au moins une direction de variation, la source lumineuse et la caméra linéaire étant reliées à une unité de commande et de traitement d'images.

Selon l'invention :

- la source lumineuse est apte à présenter une variation continue d'intensité entre un niveau de lumière sombre et un niveau de lumière clair selon un motif périodique de période spatiale selon au moins une direction de variation d'intensité,
- l'unité de commande et de traitement d'images :
- acquiert de la caméra linéaire, une séquence de N lignes d'images successives du récipient pour chaque incrément de déplacement, pour i variant de 1 à N, avec N au moins égal à 3, en répétant les opérations suivantes pour chaque ligne d'images :

  • commande de la source lumineuse afin que le motif périodique présente la variation périodique d'intensité lumineuse dans une position,
  • acquisition de la ligne du récipient,
  • commande du décalage du motif périodique pour la prochaine ligne selon la direction de variation d'une distance, pour prendre la position,

- calcule pour chaque incrément du récipient, à partir des N de lignes d'images, au moins une ligne d'image de phase,
- analyse les lignes d'image de phase afin d'en déduire en tant que caractéristique du récipient, au moins la présence d'un défaut réfractant la lumière ou la qualité de répartition du matériau constitutif du récipient.

De plus, le dispositif selon l'invention peut présenter en outre en combinaison au moins l'une et/ou l'autre des caractéristiques additionnelles suivantes :

- la source lumineuse, comprend un ensemble de sources lumineuses élémentaires situées éventuellement derrière un panneau diffusant et commandées individuellement ou par groupes indépendants, les signaux arrivant de l'unité de commande permettant de déclencher l'allumage des sources élémentaires et pour chaque source élémentaire et pour chaque période d'intégration de la caméra linéaire, de contrôler son temps d'allumage ou une tension ou un courant de manière à moduler l'intensité lumineuse émise durant le temps d'intégration de la caméra,
- la source lumineuse comprend N sources lumineuses autonomes allumées une à une, et présentant chacune, lors de leur éclairage, une variation lumineuse de même motif périodique de période spatiale selon au moins une direction de variation, mais décalée entre les sources selon la direction de variation d'une distance, et un dispositif optique qui mélange les N sources de manière que la seule différence perceptible du point de vue de la caméra lorsque l'allumage est commandé d'une source à l'autre, est le décalage du motif selon la direction de variation,
- l'unité de commande et de traitement est reliée à un système de capteurs pour :

  • prendre en compte la vitesse de défilement ou de rotation des récipients, afin d'adapter la vitesse de lecture de la caméra et d'affichage des différents motifs de la source lumineuse,
  • et/ou à un dispositif éjecteur, pour éjecter des récipients défectueux,
  • et/ou à un système informatique de supervision, des comptages de défaut, ou de mesures de répartition de verre.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue de dessus d'une machine d'inspection de récipients se déplaçant en translation et mettant en oeuvre le procédé conforme à l'invention.
La **Figure 2** est une vue de dessus d'une machine d'inspection de récipients se déplaçant en rotation et mettant en oeuvre le procédé conforme à invention.
La **Figure 3** est une vue de profil de la machine conforme à l'invention.
La **Figure 4** montre, pour un incrément de déplacement du récipient, une séquence de quatre lignes d'image obtenues lors de l'illumination d'un récipient par un motif lumineux décalé pour chaque ligne d'image et dont la variation d'intensité lumineuse est parallèle à l'axe vertical du récipient.
La **Figure 5** montre, pour un incrément de déplacement du récipient, une séquence de quatre lignes d'image obtenues lors de l'illumination d'un récipient par un motif lumineux décalé pour chaque ligne d'image et dont la variation d'intensité lumineuse est perpendiculaire à l'axe vertical du récipient.
Les **Figures 6A** et **6B** sont des exemples illustrant le fonctionnement successif des sources lumineuses autonomes composant une source lumineuse conforme à l'invention.
La **Figure 7A** est un exemple d'une image de phase dépliée permettant la mise en évidence d'un défaut réfractant la lumière.
La **Figure 7B** montre les valeurs du signal de l'image illustrée à la **Fig. 7A** et prises selon la ligne de l'image, représentée par la référence **14**.
La **Figure 7C** montre l'exemple du résultat d'un traitement du signal illustré à la **Fig. 7B** par un filtre passe-haut.

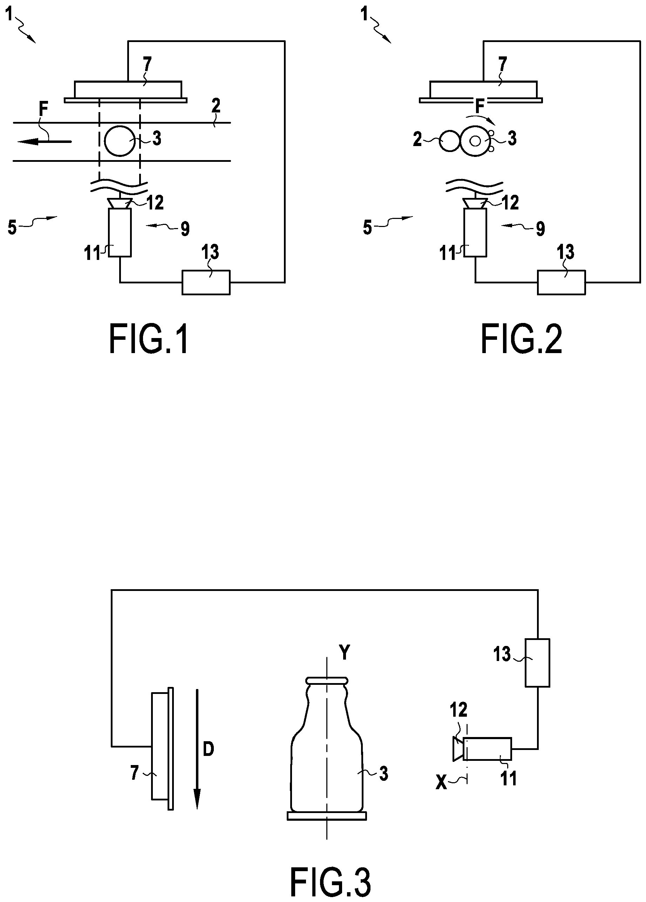

Tel que cela ressort de la **Fig. 1,** la machine d'inspection **1** selon l'invention comporte un moyen de déplacement **2** de récipients transparents ou translucides **3** selon une trajectoire déterminée par la flèche **F**, à savoir une direction de déplacement horizontale linéaire dans l'exemple illustré à la **Fig. 1**. Les récipients **3** sont transportés en position dressée ou debout à haute cadence, c'est-à-dire typiquement de 50 à 600 articles par minute, c'est-à-dire à une vitesse de transport pouvant atteindre 1,2m/s, Les récipients **3** sont ainsi amenés à défiler successivement à haute cadence devant un poste d'inspection **5**.

La **Fig. 2** est une vue d'une machine **1** pour inspecter des récipients **3** entraînés en rotation selon une trajectoire circulaire **F**. Classiquement chaque récipient **3** est entraîné en rotation sur lui-même sur au moins un tour autour de son axe vertical de symétrie **Y**, à l'aide d'un moyen de déplacement **2** de tous types connus. Les récipients **3** sont amenés et retirés successivement du poste d'inspection **5** automatiquement à l'aide de tous moyens connus.

Le poste d'inspection **5** comporte au moins une source lumineuse **7** disposée d'un côté du récipient **3** et un système **9** de prise d'images des récipients, disposé de l'autre côté du récipient **3**. Ainsi, tel que cela ressort plus précisément des **Fig. 1** à **3**, chaque récipient **3** est amené à se déplacer, entre la source lumineuse **7** et le système **9** prenant des images des récipients **3** en association avec la source lumineuse **7**.

Le système de prise d'images **9** comporte une caméra linéaire **11** munie d'un objectif **12** et reliée à une unité **13** de commande et de traitement des images prises. L'unité de commande et de traitement **13** assure la prise et l'analyse des images des récipients en vue d'en déduire au moins une caractéristique des récipients. Comme cela sera expliqué en détail dans la suite de la description, cette unité de commande et de traitement **13** permet de déduire, en tant que caractéristique des récipients, la présence d'un défaut réfractant la lumière et/ou la qualité de répartition du matériau constitutif du récipient.

Selon une caractéristique de l'invention, la caméra **11** est de type linéaire c'est à dire qui délivre une seule ligne de pixels s'étendant selon une direction rectiligne **X.** Cette caméra linéaire peut être couleur ou noir et blanc, sensible aux ultraviolets, à la lumière visible ou infrarouge, de type par exemple à décalage temporel et intégration. Les caméras linéaires offrent pour un prix raisonnable, une résolution élevée, couramment de 1 024 à 4 096 pixels. Malgré cela, la vitesse de lecture de la caméra linéaire est très élevée, atteignant 40kHz, ce qui est nettement supérieur par exemple à la fréquence de lecture d'une caméra matricielle de même technologie.

La caméra linéaire **11** possède un champ d'observation adapté pour couvrir une partie du récipient **3**. Avantageusement, la caméra **11** est adaptée pour prendre des images d'un récipient **3** sur toute sa hauteur. A cet effet, la source lumineuse **7** comporte une surface émettrice de lumière, d'étendue suffisante pour rétroéclairer au moins une partie du champ observé correspondant à la zone du récipient à inspecter et en particulier la paroi du récipient selon toute sa hauteur. Il est à noter que le poste d'inspection **5** peut comporter plusieurs systèmes de prise d'images combinées à des sources lumineuses pour permettre une inspection sur tout ou partie de la circonférence des récipients lors de leur déplacement devant le poste d'inspection **5**.

Il est à noter que lorsque le déplacement des récipients **3** est une translation selon une direction déterminée **F** alors la direction **X** du réseau capteur de la caméra linéaire **9** n'est pas parallèle à la direction de défilement **F**. Dans le cas où le déplacement des récipients **3** est une rotation autour de l'axe vertical **Y** de symétrie des récipients **3**, alors la direction **X** du réseau capteur de la caméra linéaire **9** n'est pas perpendiculaire à l'axe vertical de symétrie **Y** des récipients **3**.

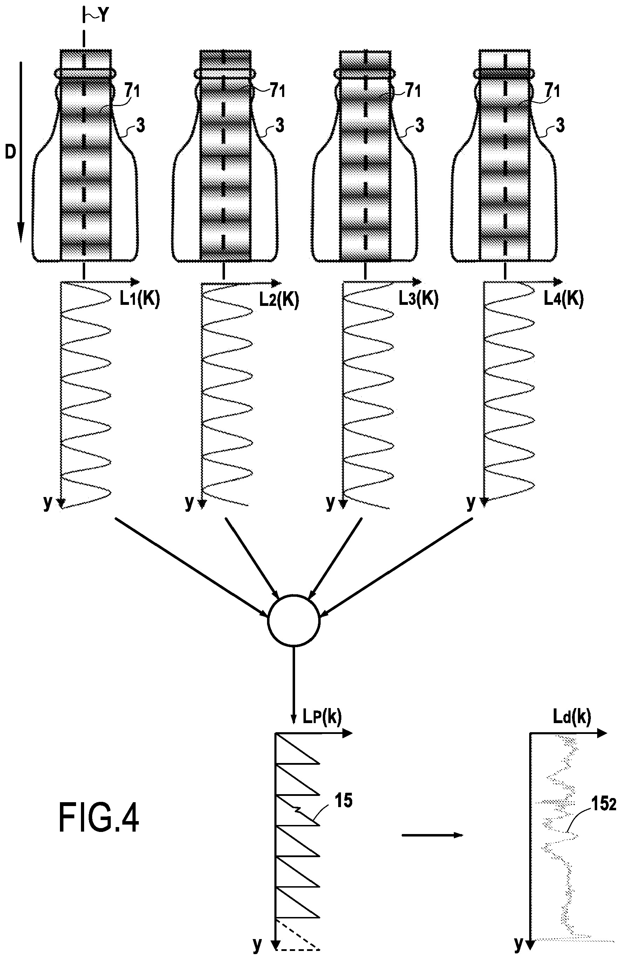

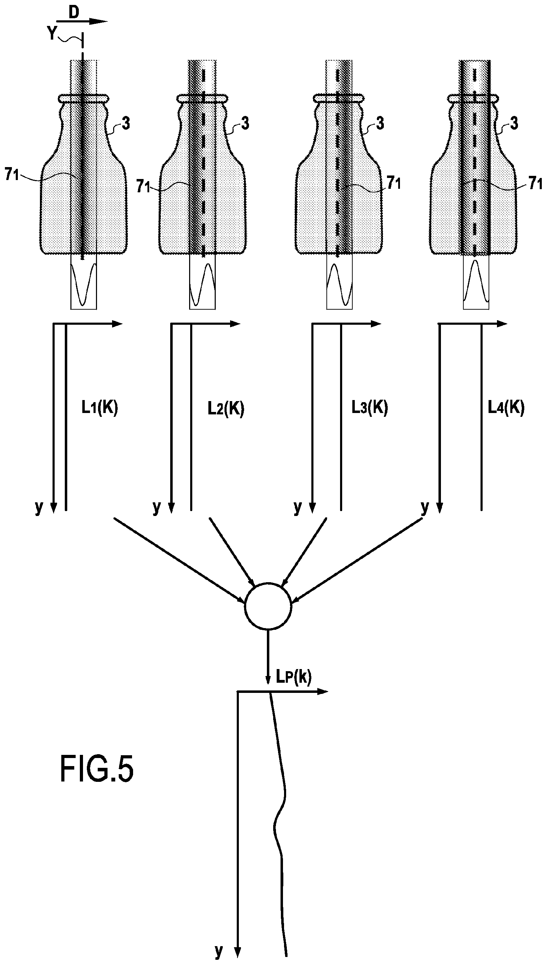

Selon une caractéristique de l'objet de l'invention, la source lumineuse **7** présente une variation continue d'intensité lumineuse selon un motif périodique **7₁** adapté pour être transmis à travers le récipient **3**. Ainsi, le motif lumineux périodique **7₁** est donc vu à travers le récipient **3,** par transmission. La source lumineuse **7** présente un motif d'intensité lumineuse périodique, de période spatiale **T,** selon au moins une première direction de variation **D**. Le motif lumineux périodique **7₁** de la source lumineuse tel qu'illustré par exemple aux **Fig. 4** et **5,** correspond à une variation spatiale de l'intensité lumineuse émise. Ainsi, différents points de la source lumineuse **7** émettent plus ou moins de lumière.

La variation d'intensité lumineuse (ou le contraste global) de la source lumineuse **7** peut s'étendre depuis un niveau sombre jusqu'à un niveau clair de lumière déterminé, selon au moins la première direction de variation. Cette variation d'intensité lumineuse selon cette première direction **D** est une fonction périodique, par exemple quasi sinusoïdale et de préférence sinusoïdale. A condition de pouvoir la reproduire décalée sans modification de forme, une fonction périodique non sinusoïdale est utilisable bien que cela présente comme inconvénient de complexifier le calcul de phase et/ou de nécessiter l'acquisition d'un plus grand nombre d'images, et par conséquent rend plus couteuse l'utilisation de l'invention pour inspecter en ligne des récipients transparents ou translucides.

Lorsque la variation périodique de la source lumineuse **7** n'est pas strictement sinusoïdale, le traitement des images peut rester le même, c'est-à-dire comprendre une étape de calcul d'une image phase, avec l'hypothèse d'une variation sinusoïdale. Cela conduit à des erreurs locales dans la détermination de la phase, et les valeurs de décalage de phase ne sont pas strictement exactes. Il en résulte l'impossibilité de mesurer les formes tridimensionnelles des surfaces ou dioptres traversés, ce qui de toute manière est par ailleurs limité par la traversée de quatre dioptres par la lumière. Mais il reste possible avec une bonne capacité de discrimination, la détection des défauts réfractants et/ou de répartition du verre, dans la mesure où seules les variations locales fortes (rapides et/ou de forte amplitude) de la phase sont à détecter, qui sont l'objet principal de l'invention.

Selon une caractéristique préférée de réalisation, le motif périodique **7₁,** présente, selon la direction de variation **D,** une variation d'intensité lumineuse sinusoïdale. Dans l'exemple illustré à la **Fig. 4,** la direction de variation **D** est parallèle à l'axe vertical de symétrie **Y** des récipients **3** alors que dans l'exemple illustré à la **Fig. 5,** la direction de variation **D** est perpendiculaire à l'axe vertical **Y** des récipients **3.** Selon ces exemples, les valeurs d'intensité ou de luminosité de la source suivant la direction **D** varient entre un minimum Lo - A et un maximum Lo + A selon une formule

$$L(x) = Lo + A \, sinus \, (\omega.x + \varphi)$$

où :

     L(x) : intensité de lumière émise pour l'abscisse x
     Lo : intensité moyenne
     A : amplitude de variation
     $\omega$ : pulsation
     $\varphi$ : phase en x=0

Dans les exemples illustrés aux **Fig. 4** et **5,** le motif lumineux périodique **7₁** présente une structure de franges lumineuses rectilignes. Sur les **Fig. 4** et **5,** la source lumineuse **7** présente une variation d'intensité lumineuse selon le motif périodique, maximale selon la direction **D** et nulle dans la direction perpendiculaire d'extension des franges lumineuses rectilignes.

Dans la suite de la description, la direction de variation **D** de l'intensité lumineuse est considérée, par rapport aux directions horizontale et verticale prises dans un repère 0, x, y. Dans l'exemple illustré à la **Fig. 4,** la direction de variation **D** de l'intensité lumineuse de la source lumineuse **7** correspond à la variation maximale de l'intensité lumineuse qui est verticale (axe y) de sorte que selon la direction horizontale (axe x), l'intensité lumineuse de la source lumineuse est constante. Dans l'exemple illustré à la **Fig. 5,** la direction de variation **D** de l'intensité lumineuse de la source lumineuse **7** est représentée parallèle par rapport à la direction horizontale (axe x). Il est à noter que la direction de la variation maximale de l'intensité lumineuse de la source lumineuse peut faire un angle d'inclinaison $\alpha$ par rapport à la direction horizontale (axe x). Ainsi, la direction de variation **D** du motif périodique peut être parallèle, perpendiculaire ou oblique par rapport à la direction du réseau capteur de la caméra linéaire.

Selon les exemples illustrés aux **Fig. 4** et **5,** la source lumineuse **7** présente un réseau de franges lumineuses parallèles à une seule direction. Il est à noter qu'il peut être envisagé que la source lumineuse **7** présente des franges selon plusieurs directions. Ainsi, le motif lumineux **7** peut présenter, des franges de formes différentes telles que des formes courbes, en cercles concentriques, en chevrons, etc. Ces complications du motif lumineux présentent un intérêt pour adapter la sensibilité de la détection selon les différentes régions de l'objet, en considérant que la détection est anisotrope en raison de l'orientation du motif.

La source lumineuse **7** est choisie essentiellement en fonction de la nature des caractéristiques du récipient à déterminer et, en fonction de la forme des récipients, comme cela sera compris dans la suite de la description.

Selon une caractéristique avantageuse de l'invention, il est à noter que le poste d'inspection **5** peut comporter plusieurs sources lumineuses **7** comportant des motifs périodiques présentant des variations d'intensité lumineuse s'établissant selon des directions différentes.

L'unité de commande et de traitement **13** pilote la source lumineuse **7** et la caméra **11** de manière à réaliser pour chaque récipient **3** placé devant la source lumineuse **7,** une acquisition d'une séquence d'images successives, qui est répétée cycliquement pour chaque incrément de déplacement du récipient, noté **k** dans la suite de la description. Pour chaque incrément de déplacement **k,** le récipient **3** occupe une position différente le long de la trajectoire de déplacement **F.** En pratique, les récipients **3** se déplacent de façon continue devant la caméra **11,** et les incréments de déplacement correspondent à des positions différentes du récipient selon sa trajectoire de déplacement **F.** Compte tenu de l'acquisition d'images par une caméra linéaire **11,** les images prises sont appelées dans la suite de la description, lignes d'images **Li(k)** du récipient, pour **i** variant de 1 à **N.**

Selon une caractéristique de l'invention, pour chaque incrément de déplacement **k,** l'unité de commande et de traitement d'images acquiert de la caméra linéaire, une séquence de **N** images linéaires successives, appelées lignes d'images **Li(k)** du récipient, pour i variant de 1 à **N,** avec **N** supérieur à 2, c'est-à-dire au moins égale à 3, soit **L1(k)** à **LN(k).** Une telle séquence de **N** lignes d'images pour un incrément de déplacement est réalisée de manière que pour chaque ligne d'image **Li(k)** :

-    on illumine le récipient **3** par la source lumineuse **7,**
-    on acquiert la ligne d'image **Li(k)** du récipient,
-    on décale le motif périodique **7₁** pour la prochaine ligne **Li+1(k)** selon la direction de variation **D** d'une distance **T/N,** avec la période spatiale du motif lumineux.

Dans l'exemple illustré aux **Fig. 4** et **5,** pour chaque incrément de déplacement **k,** une séquence de quatre illuminations est créée avec la source lumineuse avec un décalage du motif périodique **7₁** selon la direction de variation **D,** d'une distance **T/4.** Pour chacune de ces illuminations, il est procédé à une acquisition des lignes d'images **L1(k), L2(k), L3(k)** et **L4(k)** au nombre de quatre dans l'exemple illustré, prises selon les lignes en pointillé sur les **Fig. 4** et **5.**

Entre chaque acquisition d'une ligne d'image d'une séquence apparaît un décalage spatial relatif selon la direction de variation **D** du motif périodique, entre le récipient **3** et le motif périodique **7₁** de la source lumineuse **7.** Ainsi, pour chaque séquence, le motif périodique **7₁** s'est décalé selon la direction de variation **D,** d'une image à l'autre devant le récipient **3** qui est considéré comme restant fixe.

En effet, il peut être considéré que le déplacement du récipient **3** est négligeable entre deux acquisitions successives. On peut donc considérer que N lectures successives correspondent à des relectures de la même partie du récipient. Par exemple, pour des récipients en défilement à 1m/s, une caméra à 40kHz lit 40 lignes par mm. Par exemple, quatre lignes d'image acquises successivement (le motif de la source lumineuse étant décalé à chaque fois), peuvent être considérées comme quatre lectures sur le récipient de la même ligne d'image de 0.1 mm de large.

Le décalage du motif périodique de la source lumineuse **7** peut être réalisé de toute manière appropriée. Ainsi, la source lumineuse **7** peut comporter un ensemble de sources lumineuses élémentaires situées éventuellement derrière un panneau diffusant et commandées individuellement ou par groupes indépendants, les signaux arrivant de l'unité de commande permettant de déclencher l'allumage des sources élémentaires et pour chaque source élémentaire et pour chaque période d'intégration de la caméra linéaire, de contrôler son temps d'allumage ou une tension ou un courant de manière à moduler l'intensité lumineuse émise durant le temps d'intégration de la caméra.

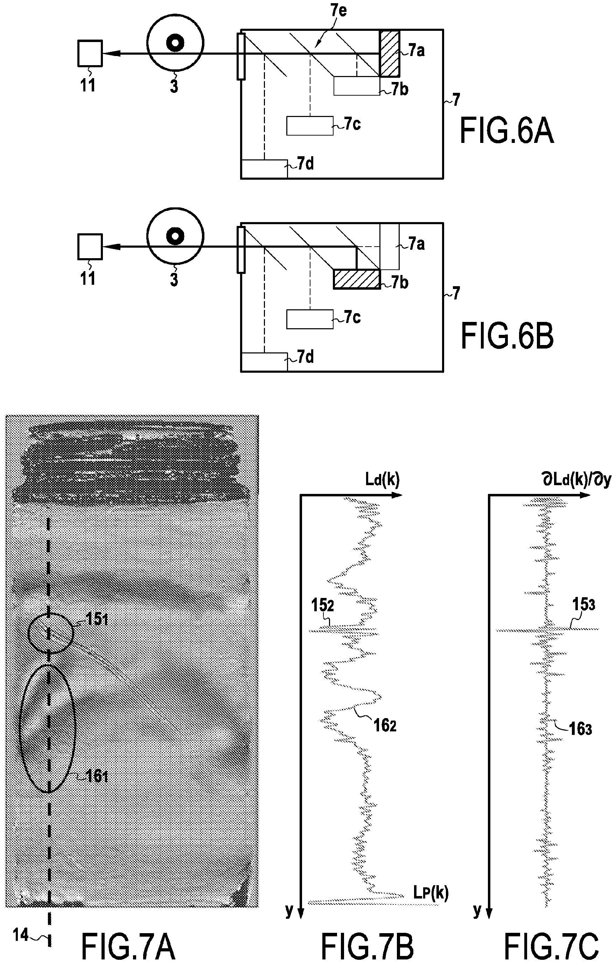

Selon un autre exemple de réalisation illustré aux **Fig. 6** et **6A,** la source lumineuse **7** comprend **N** (4 dans l'exemple illustré) sources lumineuses autonomes **7a, 7b, 7c, 7d** aptes à être allumées une à une, et présentant chacune, lors de leur éclairage, une variation lumineuse de même motif périodique **7₁,** de période spatiale **T** selon au moins une direction de variation **D,** mais décalée entre les sources selon la direction de variation **D** d'une distance T/N. La source lumineuse **7** comprend également un dispositif optique **7e** qui mélange les N sources de manière que la seule différence perceptible du point de vue de la caméra **11** lorsque l'on commande l'allumage d'une ou d'une autre source autonome est le décalage du motif périodique selon la direction de variation **D.** Dans l'exemple illustré, le dispositif optique **7e** comporte des lames optiques semi-réfléchissantes récupérant les faisceaux lumineux délivrés par les sources lumineuses autonomes.

L'unité de commande et de traitement **13** acquiert en transmission, à travers chaque récipient **3** et à l'aide la caméra **11,** pour chaque incrément de déplacement, une séquence d'au moins trois lignes d'images **L1(k)** à **LN(k),** qui présentent entre chacune d'elles, un décalage du motif périodique par rapport au récipient, selon une direction de variation **D** du motif périodique. Ainsi, pour chaque incrément de déplacement, l'unité de commande et de traitement **13** dispose d'au moins trois lignes d'image dans lesquels le motif périodique est décalé en phase par rapport au récipient.

L'unité de commande et de traitement **13** construit alors pour chaque récipient, et pour chaque incrément de déplacement **k** du récipient **3,** au moins une ligne d'image de phase **LP(k),** à partir des N lignes d'images **L1(k)** à **LN(k).** Pour chaque point du récipient, la variation de son niveau de gris dans les **N** lignes d'images est connue et correspond au décalage relatif du motif périodique. Il est donc possible de calculer la phase de chaque point du récipient. Le calcul des lignes d'images de phase peut être réalisé à l'aide de diverses techniques et notamment conformément par exemple au brevet EP 1 980 843.

L'acquisition d'au moins trois lignes d'images **L1(k) L2(k)** et **L3(k)** est nécessaire afin d'obtenir un calcul de phase pour chaque pixel de la ligne d'image de phase **LP(k).** En effet, lorsque le motif est considéré comme sinusoïdal, le décalage du motif entre chaque acquisition se traduit pour chaque pixel de la caméra par une variation temporelle de son niveau de gris, cette fonction du temps est également sinusoïdale. Il faut connaître au moins trois valeurs d'une sinusoïde pour la déterminer et donc connaître sa phase. La phase de chaque pixel le long de la ligne **LP(k)** est donc déterminée par la connaissance d'au moins trois valeurs durant le décalage en phase du motif. S'il n'y a pas de déviation de lumière par le récipient inspecté, la phase ainsi déterminée est constante pour tous les pixels le long de la ligne **LP(k),** ce qui arrive par exemple lorsqu'il n'y a aucun récipient interposé entre la source lumineuse et la caméra, ou bien lorsque le récipient est constitué de surfaces planes et parallèles. Inversement, si le récipient à contrôler est susceptible par endroit de dévier la lumière le traversant, des variations de phase sont provoquées le long de la ligne **LP(k)** à l'endroit de ces déviations. La connaissance d'un nombre supérieur de valeurs (N>3) permet une détermination plus précise d'une sinusoïde en présence de bruit ou de perturbations diverses, soit en écartant les valeurs erronées, soit en effectuant des régressions d'ordre plus ou moins élevé. Donc, en augmentant le nombre **N** d'images **LN(k)** acquises, on obtient théoriquement pour chaque incrément de déplacement **k** une ligne d'images de phase **LP(k)** de meilleure qualité. Toutefois, selon l'invention, pour un temps de lecture de caméra linéaire minimal donné **(Ti),** l'acquisition d'un nombre **N** plus élevé de lignes **LN(k)** imposerait une durée d'acquisition importante de ces **N** images, de sorte que le déplacement des récipients pendant cette durée **(NxTi)** n'est plus négligeable. On aboutirait donc à une baisse de la résolution du système, ou bien à une limitation de cadence du système, ou encore à des lignes d'images de phase **LP(k)** erronées. Avantageusement, le nombre de lignes d'images acquises pour chaque incrément de déplacement est compris entre 3 et 5. Par exemple lorsque **N** vaut 5, avec une caméra fonctionnant avec une fréquence ligne de 50kHz (50000 lignes acquises par seconde) et une vitesse de défilement des récipients sur un convoyeur de 1 m/s, l'incrément de déplacement vaut 0,1 mm et donc la résolution de l'image de phase **IP** dans la direction de déplacement sera de 10 pixels par millimètre.

A partir de **N** lignes d'images acquises pour chaque incrément de déplacement de chaque récipient, l'image de phase **LP(k)** est calculée comme évoqué ci-dessus **(Fig. 4** et **5).** Pour chaque récipient, l'unité de commande et de traitement **13** dispose d'au moins une et d'une manière générale, de plusieurs séquences de **N** lignes d'images composées chacune de **N** lignes **Li(k)** pour **i** = 1 à **N,** avec un décalage cyclique du motif de la source pour chaque valeur de **i,** et un déplacement continu ou incrémental de l'article pour chaque valeur de **k.** Un algorithme de calcul de phase est appliqué individuellement à chaque point du récipient. Le choix de l'algorithme de calcul de phase parmi les divers algorithmes disponibles, dépend en particulier du récipient, du motif périodique, de la vitesse de calcul, de la précision souhaitée, etc.

Selon une variante de l'invention, le procédé, pour l'analyse des lignes d'image de phase **LP(k),** comprend après l'opération visant à obtenir des lignes d'image de phase pour chaque récipient, une opération de dépliement de phase. En effet, de par la périodicité de la source lumineuse **7,** la phase obtenue se retrouve aussi périodiquement de sorte qu'elle est définie uniquement entre -π et π. Il peut être envisagé de déplier la phase en vue d'éliminer les sauts de 2π pour obtenir l'information de variation de phase **Ld(k).** Comme illustré à la **Fig. 4,** dans le cas où la direction **D** est parallèle aux lignes d'images délivrées par la caméra, la phase obtenue dans la ligne de phase **LP(k)** varie périodiquement et présente des sauts d'amplitude 2π. Un défaut **15** réfractant est repérable dans le signal **Lp(k).** Après dépliement, on retrouve le défaut **15₂** dans la phase dépliée **Ld(k).** La **Fig. 7B** montre cet exemple de ladite image de phase dépliée **Ld(k)** en relation avec la position du défaut dans une image bidimensionnelle de phase dépliée obtenue après d'une part, juxtaposition de lignes pour les valeurs successives de **k,** et d'autre part dépliement de phase.

L'unité de contrôle et de traitement **13** assure ensuite l'analyse de chaque ligne d'image de phase et plus précisément des variations de la phase afin d'en déduire au moins une caractéristique du récipient **3.** Selon une première variante de réalisation, l'analyse de la ligne d'image de phase consiste à déterminer la vitesse et/ou l'amplitude de la variation du signal dans la ligne d'image de phase et à comparer les vitesses et/ou amplitudes à des seuils afin de déterminer la présence d'un défaut réfractant la lumière ou la qualité de répartition du matériau constitutif du récipient. Le traitement de chaque ligne d'image de phase peut être réalisé selon diverses méthodes connues. Par exemple, il peut être prévu de détecter des variations locales (ou décalages) de phase par exemple, en comparant la phase de chaque point de la ligne d'image à celle de ses voisins. Une autre technique consiste à calculer en tout point, une pente de variation de la phase et à comparer le résultat en tout point à une valeur de seuil. Le calcul de cette pente de variation peut être réalisé selon une ou plusieurs directions appropriées.

Si la variation de la phase est rapide et d'amplitude supérieure à un seuil donné, alors il peut être déduit au moins une caractéristique du récipient à savoir la présence d'un défaut réfractant la lumière. Si la variation de la phase est lente et d'amplitude supérieure à un seuil donné, alors il peut être déduit au moins une autre caractéristique du récipient, à savoir une mauvaise répartition du matériau constitutif du récipient.

Selon une deuxième variante de réalisation, une analyse fréquentielle de l'image de phase est réalisée permettant de sélectionner les variations en fonction de leur fréquence spatiale et donc de détecter la présence de défauts réfractants voire même de qualifier la qualité de la peau du verre par l'amplitude des hautes fréquences, et la qualité de répartition de matière par l'amplitude des basses fréquences.

Les variations de la phase dépendent directement des déviations ou réfractions de lumière par le récipient sous l'effet des défauts réfractant et de la répartition du verre.

Selon une variante de l'invention, l'unité de commande et de traitement **13** calcule directement pour chaque séquence de **N** lignes d'images **Li(k),** i = 1 à **N,** une ligne d'image de phase **LP(k)** et analyse chacune desdites lignes de phase **LP(k)** séparément en opérant un dépliement puis la recherche des défauts. Cela est possible lorsque la direction **D** n'est pas orthogonale à la ligne d'image, car la phase peut être dépliée. Il est possible à ce stade soit de détecter les défauts dans les lignes d'images dépliées, soit de juxtaposer des lignes d'image de phases dépliées obtenues pour des incréments de déplacement (k) successifs de manière à obtenir une image bidimensionnelle de phase dépliée et l'analyser.

Selon une variante avantageuse de réalisation, fonctionnant quel que soit la direction **D** par rapport à la ligne d'image, l'unité de commande et de traitement **13** calcule pour chaque séquence de **N** lignes d'image **Li(k),** i = 1 à **N,** une ligne d'image de phase **LP(k),** puis juxtapose les lignes d'image de phase **LP(k)** obtenues pour des incréments de déplacement **k** successifs pour constituer une image de phase **IP** d'au moins une partie de récipient, ladite image de phase étant ensuite analysée. Dans la mesure où l'invention permet la superposition exacte (pixel à pixel) des **N** lignes d'image **Li(k),** il est bien entendu équivalent que pour l'analyse des lignes d'image de phase **LP(k),** que l'unité de commande et de traitement **13** juxtapose des lignes d'image **Li(k)** obtenues pour des incréments **k** successifs, dans **N** images bidimensionnelles, correspondant chacune à une des **N** positions de décalage du motif, puis combine les **N** images bidimensionnelles pour calculer l'image de phase **IP** d'au moins une partie de récipient, ladite image de phase étant ensuite analysée.

Ainsi, d'une manière générale, le procédé consiste pour l'analyse des lignes d'image de phase **LP(k),**

à juxtaposer des lignes d'image **Li(k)** ou des lignes d'image de phase **LP(k)** ou des lignes d'image de phase dépliée, obtenues pour des incréments de déplacement **k** successifs de manière à obtenir une image de phase **IP** d'au moins une partie de récipient. La juxtaposition de lignes d'image permettant d'obtenir et d'analyser des images bidimensionnelles est réalisée de préférence au plus tard avant le dépliement de phase, cette étape prenant alors en compte une information plus complète.

La **Fig. 7A** illustre un exemple d'image de phase dépliée par exemple par dérivation de l'image de phase **IP,** permettant la mise en évidence d'un défaut réfractant la lumière. Dans cette image de la **Fig. 7A,** la référence **15₁** signale la présence d'un pli sur le récipient. La référence **16₁** indique des variations lentes de la phase dues à la déviation de la lumière par la répartition hétérogène du verre et apparaissant par des régions claires et sombres.

Le défaut réfractant, à savoir le pli **15₁** dans l'exemple considéré, est facilement localisé par sa signature **15₂** apparaissant dans le signal de la ligne d'image de phase dépliée illustrée à la **Fig. 7B** et pris selon la colonne de l'image portant le repère **14.** Le défaut réfractant provoque dans le signal, des pentes fortes de variation locale. Dans ce signal de la ligne d'image de phase dépliée pris selon la ligne **14,** il peut être décelé également des variations lentes liées à la répartition hétérogène du verre, ces variations lentes étant repérées par la référence **16₂** dans le signal de la **Fig. 7B.**

La **Fig. 7C** montre à titre d'exemple le résultat $\partial\mathbf{LP(k)}/\partial\mathbf{y}$ du traitement d'une ligne d'image de phase déplié illustrée à la **Fig. 7B,** par un filtre passe-haut tel qu'une dérivée partielle selon la direction **D** qui se trouve dans cet exemple égale à la direction **Y.** Le défaut **15₁** apparaissant dans la ligne d'image de la **Fig. 7A** est facilement détectable, dans le signal illustré à la **Fig. 7C** (référence **15₃**) car l'amplitude des variations locales du signal est forte.

Dans ce signal illustré à la **Fig. 7C,** la référence **16₃** repère les variations lentes liées à la répartition hétérogène du verre. Il est à noter que le caractère hétérogène de la répartition du verre n'altère pas la détection du défaut réfractant car cette répartition hétérogène du verre ne produit pas, comme cela apparait au niveau de la référence **16₃,** de modifications significative du signal.

Il doit être considéré que le motif périodique **7₁** est observé à travers les récipients donc pour la zone centrale à travers quatre dioptres successifs : air-verre, verre-air, air-verre et verre-air, correspondant respectivement aux quatre surfaces externe, interne, interne et externe traversées par la lumière. Ces surfaces étant non uniformément parallèles entre elles du fait de la réparation hétérogène du matériau et de la présence de défauts de surface, de bouillons, etc., elles dévient la lumière à la manière de prismes. Le motif lumineux périodique **7₁** s'en trouve déformé lorsqu'il est observé à travers le récipient transparent. Contrairement aux techniques visant à détecter uniquement des déformations des motifs et l'apparition, au sein des motifs, de points ou zones de contraste local, le procédé de décalage de phase permet un calcul de phase qui est une mesure des déviations subies par les rayons lumineux, ce qui permet d'en faire une analyse fine et discriminante conduisant à caractériser le pouvoir réfractant des défauts et la qualité de répartition du matériau.

Dans les exemples décrits ci-dessus, il est prévu d'illuminer chaque récipient, à l'aide d'une source lumineuse présentant une variation d'intensité lumineuse selon une direction de variation **D.** Selon une autre variante de réalisation, il est à noter qu'il peut être envisagé d'illuminer chaque récipient à l'aide d'une source lumineuse présentant une variation d'intensité lumineuse selon un motif périodique de période **T₂** selon une deuxième direction de variation différente de la première direction de variation **D.**

Selon une caractéristique avantageuse de réalisation, l'unité de commande et de traitement **13** commande la source lumineuse **7.** L'unité de commande et de traitement **13** pilote la source lumineuse **7** de manière que le motif lumineux périodique **7₁** soit décalé dans une direction donnée pour chaque acquisition de ligne d'image par la camera linéaire, comme expliqué ci-avant.

Selon une caractéristique de réalisation, l'unité de commande et de traitement **13** déclenche les acquisitions en fonction de la position précise du récipient devant la source lumineuse **7.** L'unité de commande et de traitement **13** peut être, pour cela, reliée à des capteurs de présence et/ou déplacement tels que cellules et codeurs incrémentaux.

Selon un deuxième mode de réalisation du poste d'inspection, l'unité de commande et de traitement **13** comporte également des moyens de calcul d'au moins une image d'intensité à partir de N lignes d'images de chaque séquence du récipient, issues du système de prise d'images **9.** Selon une variante avantageuse de réalisation, ces lignes d'image d'intensité de lumière obtenues pour des incréments de déplacement k successifs sont juxtaposées de manière à obtenir une image de transmission du récipient ou d'une partie de récipient. L'unité de commande et de traitement **13** comporte également des moyens d'analyse des images d'intensité ou de l'image de transmission pour en déduire en tant que caractéristique du récipient **3,** la présence d'un défaut absorbant la lumière, et/ou des dimensions du récipient.

De manière classique, l'unité de commande et de traitement **13** est reliée à un système de capteurs pour :

- prendre en compte la vitesse de défilement ou de rotation des récipients **3,** afin d'adapter la vitesse de lecture de la caméra et d'affichage des différents motifs de la source lumineuse **7,**
- et/ou à un dispositif éjecteur, pour éjecter des récipients défectueux,
- et /ou à un système informatique de supervision, des comptages de défaut, ou de mesures de répartition de verre.

Selon une caractéristique avantageuse de réalisation, la caméra linéaire délivre les lignes d'images **Li(k)** avec une fréquence variant avec une mesure de la vitesse de déplacement des récipients afin que la résolution spatiale de l'image de phase **IP** soit constante.

Selon une autre caractéristique avantageuse de réalisation, l'analyse des lignes d'image de phase **LP(K)** comprend une étape de correction géométrique afin de réduire les effets de vibration du récipient pendant le déplacement et/ou les effets de perspective dus à une observation non orthogonale à la direction de déplacement.

L'invention n'est pas limitée aux exemples décrits et représentés car diverses modifications peuvent y être apportées sans sortir de son cadre.

**Revendications**

1. Procédé optique d'inspection à haute cadence en ligne de récipients transparents ou translucides **(3)** se déplaçant entre une caméra linéaire **(11)** et une source lumineuse **(7)** présentant une variation continue d'intensité lumineuse selon un motif périodique **(7₁)** de période spatiale **T** selon au moins une direction de variation **(D),** la source lumineuse et la caméra linéaire **(11)** étant reliées à une unité de commande et de traitement d'images **(13),** le procédé étant **caractérisé en ce que** :

    - pour chaque incrément de déplacement **(k)** du récipient inspecté, on acquiert cycliquement, une séquence de **N** lignes d'images **(Li (k))** successives du récipient pour **i** variant de 1 à **N,** avec **N** au moins égal à 3, de sorte que pour chaque ligne d'image **(Li(k))** :

        • on illumine le récipient **(3)** par la source lumineuse **(7),**
        • on acquiert la ligne d'image **(Li(k))** du récipient,
        • on décale le motif périodique **(7₁)** pour la prochaine ligne **(Li+1(k))** selon la direction de variation **(D)** d'une distance égale à **T/N**

    - on calcule pour chaque incrément **(k)** du récipient **(3),** à partir des N lignes d'images **(L1(k)** à **LN(k)),** au moins une ligne d'image de phase **(LP(k)),**
    - on analyse les lignes d'image de phase **(LP(k)),** afin d'en déduire en tant que caractéristique du récipient **(3),** au moins la présence d'un défaut réfractant la lumière ou la qualité de répartition du matériau constitutif du récipient.

2. Procédé selon la revendication 1, **caractérisé en ce**

**que** l'analyse des lignes d'image de phase **(LP(k))** consiste à déterminer la vitesse et/ou l'amplitude de variation locale de la phase et à comparer lesdites vitesses et/ou amplitudes à des seuils afin de déterminer la présence d'un défaut réfractant la lumière ou la qualité de répartition du matériau constitutif du récipient.

3. Procédé selon la revendication 1, **caractérisé en ce que** pour l'analyse des lignes d'image de phase **LP(k),** il comprend après l'opération visant à obtenir des lignes d'image de phase pour chaque récipient, une opération de dépliement de phase.

4. Procédé selon la revendication 1, **caractérisé en ce que** :

    - on calcule pour chaque incrément de déplacement **(k)** du récipient **(3),** à partir des **N** lignes d'images **(L1(k)** à **LN(k)),** au moins une ligne d'image d'intensité de lumière **(LT(k)),**
    - on juxtapose les lignes d'image d'intensité de lumière **LT(k)** obtenues pour des incréments de déplacement **(k)** successifs de manière à obtenir une image de transmission du récipient ou d'une partie de récipient,
    - on analyse l'image de transmission contenant l'information de quantité de lumière transmise par le récipient, afin d'en déduire en tant que caractéristique du récipient **(3),** au moins la présence d'un défaut absorbant la lumière.

5. Procédé selon la revendication 1, **caractérisé en ce que** la direction de variation **(D)** du motif périodique est parallèle, perpendiculaire ou oblique par rapport au réseau capteur de la caméra linéaire.

6. Procédé selon une des revendications 1 à 5, **caractérisé en ce qu'**il consiste pour l'analyse des lignes d'image de phase **(LP(k)),** à juxtaposer des lignes d'image **Li(k)** ou des lignes d'image de phase **LP(k)** ou des lignes d'image de phase dépliée obtenues pour des incréments de déplacement **(k)** successifs de manière à obtenir une image de phase **(IP)** d'au moins une partie de récipient.

7. Procédé selon l'une des revendications 1 à 6, **caractérisé en ce que** l'analyse des lignes d'image de phase **(LP(K))** comprend une étape de correction géométrique afin de réduire les effets de vibration du récipient pendant le déplacement et/ou les effets de perspective dus à une observation non orthogonale à la direction de déplacement.

8. Dispositif optique d'inspection à haute cadence sur ligne de production, de récipients transparents ou translucides **(3),** se déplaçant entre une caméra linéaire **(11)** et une source lumineuse **(7)** présentant une variation continue d'intensité lumineuse selon un motif périodique de période spatiale **T** selon au moins une direction de variation (**D**), la source lumineuse (**7**) et caméra linéaire (**9**) étant reliées à une unité de commande et de traitement d'images (**13**), **caractérisé en ce que** :

- la source lumineuse (**7**) est apte à présenter une variation continue d'intensité entre un niveau de lumière sombre et un niveau de lumière clair selon un motif périodique (**7**) de période spatiale **T** selon au moins une direction de variation d'intensité (**D**),
- et **en ce que** l'unité de commande et de traitement d'images :
- acquiert de la caméra linéaire, une séquence de **N** lignes d'images successives (**Li(k)**) du récipient pour chaque incrément de déplacement (**k**), pour **i** variant de 1 à **N**, avec **N** au moins égal à 3, en répétant les opérations suivantes pour chaque ligne d'images (**Li(K)**) :

• commande de la source lumineuse (**7**) afin que le motif périodique (**7**) présente la variation périodique d'intensité lumineuse dans une position (**Pi**),
• acquisition de la ligne (**Li(k)**) du récipient,
• commande du décalage du motif périodique (**7**) pour la prochaine ligne (**Li+1(k)**) selon la direction de variation (**D**) d'une distance égale à **T/N**, pour prendre la position (**Pi+1**),

- calcule pour chaque incrément (**k**) du récipient (**3**), à partir des **N** lignes d'images (**L1(k)** à **LN(k)**), au moins une ligne d'image de phase (**LP(k)**),
- analyse les lignes d'image de phase (**LP(k)**) afin d'en déduire en tant que caractéristique du récipient (**3**), au moins la présence d'un défaut réfractant la lumière ou la qualité de répartition du matériau constitutif du récipient.

9. Dispositif selon la revendication 8, **caractérisé en ce que** la source lumineuse (**7**), comprend un ensemble de sources lumineuses élémentaires situées éventuellement derrière un panneau diffusant et commandées individuellement ou par groupes indépendants, les signaux arrivant de l'unité de commande permettant de déclencher l'allumage des sources élémentaires et pour chaque source élémentaire et pour chaque période d'intégration de la caméra linéaire, de contrôler son temps d'allumage ou une tension ou un courant de manière à moduler l'intensité lumineuse émise durant le temps d'intégration de la caméra.

10. Dispositif selon la revendication 8, **caractérisé en**

ce que la source lumineuse (**7**) comprend **N** sources lumineuses autonomes (**7a, 7b, 7c, ...**) allumées une à une, et présentant chacune, lors de leur éclairage, une variation lumineuse de même motif périodique (**7₁**) de période spatiale (**T**) selon au moins une direction de variation (**D**), mais décalée entre les sources selon la direction de variation (**D**) d'une distance égale à **T/N** et un dispositif optique (**7e**) qui mélange les **N** sources de manière que la seule différence perceptible du point de vue de la caméra lorsque l'allumage est commandé d'une source à l'autre, est le décalage du motif selon la direction de variation (**D**).

11. Dispositif selon la revendication 8, **caractérisé en ce que** l'unité de commande et de traitement (**13**) est reliée à un système de capteurs pour

- prendre en compte la vitesse de défilement ou de rotation des récipients, afin d'adapter la vitesse de lecture de la caméra et d'affichage des différents motifs de la source lumineuse (**7**),
- et/ou à un dispositif éjecteur, pour éjecter des récipients défectueux,
- et /ou à un système informatique de supervision, des comptages de défaut, ou de mesures de répartition de verre.

**Patentansprüche**

1. Optisches Verfahren zur Inspektion mit hoher Taktfrequenz einer Linie von transparenten oder transluzenten Behältern (3), die sich zwischen einer Zeilenkamera (11) und einer Lichtquelle (7) bewegen, die eine kontinuierliche Änderung der Lichtintensität gemäß einem periodischen Muster (7₁) einer räumlichen Periode T in mindestens einer Änderungsrichtung (D) aufweist, wobei die Lichtquelle und die Zeilenkamera (11) mit einer Steuer- und Bildverarbeitungseinheit (13) verbunden sind, wobei das Verfahren **dadurch gekennzeichnet ist, dass**:

- für jedes Bewegungsinkrement (k) des inspizierten Behälters eine Folge von N aufeinanderfolgenden Bildzeilen (Li(k)) des Behälters für i, das von 1 bis N variiert, wobei N mindestens gleich 3 ist, derart zyklisch erworben wird, dass für jede Bildzeile (Li(k)):

• der Behälter (3) von der Lichtquelle (7) beleuchtet wird,
• die Bildzeile (Li(k)) des Behälters erworben wird,
• das periodische Muster (7₁) für die nächste Zeile (Li+1(k)) in der Änderungsrichtung (D) um einen Abstand versetzt wird, der gleich T/N ist,

- für jedes Inkrement (k) des Behälters (3) ausgehend von den N Bildzeilen (L1(k) bis LN(k)) mindestens eine Phasenbildzeile (LP(k)) berechnet wird,
- die Phasenbildzeilen (LP(k)) analysiert werden, um daraus als Merkmal des Behälters (3) mindestens die Anwesenheit eines Defekts, der das Licht bricht, oder die Verteilungsqualität des Materials, aus dem der Behälter besteht, abzuleiten.

2. Verfahren nach Anspruch 1, **dadurch gekennzeichnet, dass** die Analyse der Phasenbildzeilen (LP(k)) darin besteht, die Geschwindigkeit und/oder die Amplitude der lokalen Phasenänderung zu bestimmen und die Geschwindigkeiten und/oder Amplituden mit Schwellenwerten zu vergleichen, um die Anwesenheit eines Defekts, der das Licht bricht, oder die Verteilungsqualität des Materials, aus dem der Behälter besteht, zu bestimmen.

3. Verfahren nach Anspruch 1, **dadurch gekennzeichnet, dass** es für die Analyse der Phasenbildzeilen (LP(k)) nach dem Vorgang, der darauf abzielt, Phasenbildzeilen für jeden Behälter zu erhalten, einen Vorgang des Phasenentfaltens aufweist.

4. Verfahren nach Anspruch 1, **dadurch gekennzeichnet, dass**:

   - für jedes Bewegungsinkrement (k) des Behälters (3) ausgehend von den N Bildzeilen (L1(k) bis LN(k)) mindestens eine Bildzeile der Lichtintensität (LT(k)) berechnet wird,
   - die Bildzeilen der Lichtintensität (LT(k)), die für die aufeinanderfolgenden Bewegungsinkremente (k) erhalten werden, derart aneinandergereiht werden, um ein Übertragungsbild des Behälters oder eines Behälterteils zu erhalten,
   - das Übertragungsbild, das die Information der Lichtmenge enthält, die von dem Behälter übertragen wird, analysiert wird, um daraus als Merkmal des Behälters (3) mindestens die Anwesenheit eines Defekts, der das Licht absorbiert, abzuleiten.

5. Verfahren nach Anspruch 1, **dadurch gekennzeichnet, dass** die Änderungsrichtung (D) des periodischen Musters parallel, senkrecht oder schräg zu dem Sensorarray der Zeilenkamera ist.

6. Verfahren nach einem der Ansprüche 1 bis 5, **dadurch gekennzeichnet, dass** es für die Analyse der Phasenbildzeilen (LP(k)) darin besteht, Bildzeilen Li(k) oder Phasenbildzeilen (LP(k)) oder Bildzeilen von entfalteter Phase, die durch aufeinanderfolgende Bewegungsinkremente (k) erhalten werden, derart aneinanderzureihen, um ein Phasenbild (IP) von mindestens einem Behälterteil zu erhalten.

7. Verfahren nach einem der Ansprüche 1 bis 6, **dadurch gekennzeichnet, dass** die Analyse der Phasenbildzeilen (LP(K)) einen Schritt des geometrischen Korrigierens aufweist, um die Vibrationsauswirkungen des Behälters bei dem Bewegen und/oder die Perspektiveffekte durch eine Beobachtung, die nicht orthogonal zu der Bewegungsrichtung ist, zu reduzieren.

8. Optische Vorrichtung zur Inspektion mit hoher Taktfrequenz auf einer Produktionslinie von transparenten oder transluzenten Behältern (3), die sich zwischen einer Zeilenkamera (11) und einer Lichtquelle (7) bewegen, die eine kontinuierliche Änderung der Lichtintensität gemäß einem periodischen Muster einer räumlichen Periode T in mindestens einer Änderungsrichtung (D) aufweist, wobei die Lichtquelle und die Zeilenkamera (9) mit einer Steuer- und Bildverarbeitungseinheit (13) verbunden sind, **dadurch gekennzeichnet ist, dass**:

   - die Lichtquelle (7) geeignet ist, eine kontinuierliche Änderung der Lichtintensität zwischen einem dunklen Lichtniveau und einem hellen Lichtniveau gemäß einem periodischen Muster (7) einer räumlichen Periode T in mindestens einer Richtung der Änderung der Intensität (D) aufzuweisen,
   - und dadurch, dass die Steuer- und Bildverarbeitungseinheit:
   - von der Zeilenkamera für jedes Bewegungsinkrement (k) eine Folge von N aufeinanderfolgenden Bildzeilen (Li(k)) des Behälters für i, das von 1 bis N variiert, wobei N mindestens gleich 3 ist, erwirbt, indem die folgenden Vorgänge für jede Bildzeile (Li(K)) wiederholt werden:

     • Steuern der Lichtquelle (7), damit das periodische Muster (7) die periodische Änderung der Lichtintensität in einer Position (Pi) aufweist,
     • Erwerben der Zeile (Li(k)) des Behälters,
     • Steuern des Versetzen des periodischen Musters (7) für die nächste Zeile (Li+1(k)) in der Änderungsrichtung (D) um einen Abstand, der gleich T/N ist, um die Position (Pi+1) einzunehmen,

   - Berechnen für jedes Bewegungsinkrement (k) des Behälters (3) ausgehend von den N Bildzeilen (L1(k) bis LN(k)) mindestens einer Phasenbildzeile (LP(k)),
   - Analysieren der Phasenbildzeilen (LP(k)), um daraus als Merkmal des Behälters (3) mindestens die Anwesenheit eines Defekts, der das Licht bricht, oder die Verteilungsqualität des Materials, aus dem der Behälter besteht, abzuleiten.

9. Vorrichtung nach Anspruch 8, **dadurch gekennzeichnet, dass** die Lichtquelle (7) eine Anordnung von Elementarlichtquellen aufweist, die eventuell hinter einer Streuscheibe angeordnet sind und einzeln oder durch unabhängige Gruppen gesteuert werden, wobei die Signale, die von der Steuereinheit kommen, ermöglichen, das Einschalten der Elementarquellen sowohl für jede Elementarquelle als auch für jede Integrationsdauer der Zeilenkamera auszulösen, ihre Einschaltzeit oder eine Spannung oder einen Strom derart zu steuern, um die Lichtintensität, die während der Integrationszeit der Kamera abgestrahlt wird, zu modulieren.

10. Vorrichtung nach Anspruch 8, **dadurch gekennzeichnet, dass** die Lichtquelle (7) N autonome Lichtquellen (7a, 7b, 7c, ...), die nacheinander eingeschaltet werden und jeweils bei ihrem Einschalten eine Lichtänderung des gleichen periodischen Musters ($7_1$) einer räumlichen Periode (T) in mindestens einer Änderungsrichtung (D), die aber zwischen den Quellen in der Änderungsrichtung (D) um einen Abstand versetzt ist, der gleich T/N ist, aufweisen, und eine optische Vorrichtung (7e) aufweist, die die N Quellen derart vermischt, dass der einzige Unterschied, der von dem Standpunkt der Kamera wahrnehmbar ist, wenn das Einschalten von einer Lichtquelle zur anderen gesteuert wird, die Versetzung des Musters in der Änderungsrichtung (D) ist.

11. Vorrichtung nach Anspruch 8, **dadurch gekennzeichnet, dass** die Steuer- und Bildverarbeitungseinheit (13) mit einem Sensorsystem verbunden ist, um

- die Lauf- oder Drehgeschwindigkeit der Behälter zu berücksichtigen, um die Lesegeschwindigkeit der Kamera und die Anzeigegeschwindigkeit der verschiedenen Muster der Lichtquelle (7) anzupassen,
- und/oder mit einer Auswerfvorrichtung, um defekte Behälter auszuwerfen,
- und/oder mit einem Computersystem zum Überwachen der Zählfehler oder von Glasverteilungsmessungen.

**Claims**

1. A method of in-line optical inspection of transparent or translucent containers (3) traveling at a high rate between a linear camera (11) and a light source (7) presenting continuous variation in light intensity with a periodic pattern ($7_1$) of spatial period T along at least one variation direction (D), the light source and the linear camera (11) being connected to a control and image processing unit (13), said method being **characterized by** the following steps:

- for each movement increment ($\underline{k}$) of the inspected container, a sequence of N successive image lines (Li(k)) of the container is acquired cyclically for $\underline{i}$ lying in the range 1 to N, where N is not less than 3, such that for each image line (Li(k)), the following steps are performed:

  - illuminating the container (3) with the light source (7);
  - acquiring the image line (Li(k)) of the container; and
  - shifting the periodic pattern ($7_1$) for the next line (Li+1(k)) in the variation direction (D) through the distance equal to T/N;

- for each increment ($\underline{k}$) of the container (3), calculating at least one phase image line (LP(k)) from the N image lines (L1(k) to LN(k)); and
- analyzing the phase image lines (LP(k)) in order to deduce therefrom as a characteristic of the container (3), at least the presence of a light refracting defect or the quality of the distribution of the material constituting the container.

2. A method according to claim 1, **characterized in that** the analysis of the phase image lines (LP(k)) consists in determining the speed and/or the amplitude of local phase variation and in comparing said speeds and/or amplitudes with thresholds in order to determine the presence of a light refracting defect or the quality of the distribution of the material constituting the container.

3. A method according to claim 1, **characterized in that** for analyzing the phase image lines (LP(k)) and after the operation seeking to obtain phase image lines for each container, it includes an operation of phase unfolding.

4. A method according to claim 1, **characterized by** the following steps:

- for each movement increment ($\underline{k}$) of the container (3), using N image lines (L1(k) to LN(k)) to calculate at least one light intensity image line (LT(k));
- juxtaposing the light intensity image lines (LT(k)) that are obtained for successive movement increments ($\underline{k}$) so as to obtain a transmission image of the container or of a portion of the container; and
- analyzing the transmission image containing the information about the quantity of light transmitted by the container in order to deduce therefrom as a characteristic of the container (3), at least the presence of a light absorbing defect.

5. A method according to claim 1, **characterized in that** the variation direction (D) of the periodic pattern is parallel, perpendicular, or oblique relative to the sensor array of the linear camera.

6. A method according to any one of claims 1 to 5, **characterized in that**, for analyzing phase image lines (LP(k)), it consists in juxtaposing image lines (Li(k)) or phase image lines (LP(k)) or unfolded phase image lines obtained for successive movement increments ($\underline{k}$) so as to obtain a phase image (IP) of at least a portion of the container.

7. A method according to any one of claims 1 to 6, **characterized in that** the analysis of the phase image lines (LP(K)) includes a geometrical correction step in order to reduce the effects of vibration of the container during its movement and/or the effects of perspective due to observation being non-orthogonal relative to the movement direction.

8. An optical device for high throughput inspection on a production line of transparent or translucent containers (3) moving between a linear camera (11) and a light source (7) presenting continuous variation of light intensity with a periodic pattern of spatial period T in at least one variation direction (D), the light source (7) and the linear camera (9) being connected to a control and image processing unit (13), the device being **characterized in that**:

• the light source (7) is suitable for presenting continuous variation of intensity between a dark light level and a bright light level with a periodic pattern (7) of spatial period T in at least one intensity variation direction (D); and **in that**
• the control and image processing unit:

• acquires from the linear camera a sequence of N successive image lines (Li(k)) of the container for each movement increment ($\underline{k}$), for $\underline{i}$ varying from 1 to N, with N not less than 3, and repeating the following operations for each image line (Li(K)):

• controlling the light source (7) so that the periodic pattern (7) presents the periodic variation of light intensity in a position (Pi);
• acquiring the line (Li(k)) of the container; and
• causing the periodic pattern (7) to be shifted for the next line (Li+1(k)) along the variation direction (D) through a distance equal to T/N, in order to take the position (Pi-+1);

• calculates, for each increment ($\underline{k}$) of the container (3), at least one phase image line (LP(k)) on the basis of the N image lines (L1(k) to LN(k)); and
• analyzes the phase image line (LP(k)) in order to deduce therefrom as a characteristic of the container (3), at least the presence of a light refracting defect or the quality of the distribution of the material constituting the container.

9. A device according to claim 8, **characterized in that** the light source (7) comprises a set of individual light sources possibly situated behind a diffusing panel and controlled individually or by independent groups, the signal coming from the control unit enabling individual sources to be switched on, and for each individual source and for each integration period of the linear camera, the signals from the control unit enabling a lighting time or voltage or current to be controlled so as to modulate the intensity of light emitted during the camera integration time.

10. A device according to claim 8, **characterized in that** the light source (7) comprises N individual light sources (7a, 7b, 7c, ...) that are switched on one by one, each presenting, when switched on, light variation with the same periodic pattern ($7_1$) of spatial period (T) in at least one variation direction (D), but offset between the light sources in the variation direction (D) through a distance equal to T/N, and an optical device (7e) that mixes the N sources so that the only perceptible difference from the point of view of the camera when lighting is switched on from one source to another, is the shifting of the pattern along the variation direction (D).

11. A device according to claim 8, **characterized in that** the control and processing unit (13) is connected to:

• a system of sensors for taking account of the travel speed or rotation speed of the containers in order to adapt the reading speed of the camera and the display speed of the various patterns of the light source (7); and/or
• to an ejector device for ejecting defective containers; and/or
• to a computer system for supervision, for counting defects, or for measuring distributions of glass.

EP 3 097 407 B1

# FIG.1

# FIG.2

# FIG.3

FIG.4

FIG.5

**FIG.6A**

**FIG.6B**

**FIG.7A**

**FIG.7B**

**FIG.7C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2794241 A
- US 5004909 A
- FR 2907553
- FR 2958040
- EP 1980843 A